# EUROPEAN PATENT SPECIFICATION

(11) **EP 0 415 993 B1**
(45) Date of publication and mention of the grant of the patent: **07.04.1993**
(21) Application number: 89906198.0
(22) Date of filing: 11.05.1989
(51) Int. Cl.: C08L 5/00, C08B 37/00, E21B 43/22, E21B 43/25

(54) **XANTHAN CONCENTRATE, PROCESS OF PREPARING THEREOF AND USE THEREOF BY INCREASED RECOVERY OF OIL FROM SUBTERRANEAN FORMATIONS**
XANTHANKONZENTRATE, VERFAHREN ZUR HERSTELLUNG UND VERWENDUNG ZUR STEIGERUNG DER GEWINNUNG VON ÖL AUS UNTERIRDISCHEN FORMATIONEN
CONCENTRE DE XANTHANE, PROCEDE DE PREPARATION D'UN TEL CONCENTRE ET UTILISATION DE CE CONCENTRE POUR L'EXTRACTION ACCRUE DE PETROLE DANS DES FORMATIONS SOUTERRAINES

(30) Priority: 18.05.1988 NO 882167
(43) Date of publication of application: 13.03.1991
(73) Proprietor: BORREGAARD INDUSTRIES LIMITED, N-1701 Sarpsborg (NO)
(72) Inventor: FOSS, Per, A., N-4300 Sandnes (NO); HENRIKSEN, Inge, Brun, N-4000 Stavanger (NO)
(74) Representative: Kador & Partner
(86) International application number: NO8900045
(87) International publication number: WO8911504

(56) References cited:
- US-A- 3 591 578
- US-A- 4 667 026

## Description

The instant application relates to a xanthan concentrate, a process for preparing thereof and use thereof or a pre-concentrate - optionally supplemented with biocide - in enhanced recovery of oil from offshore subterranean formations.

To increase the efficiency of water injection by enhanced oil recovery (EOR) polymers, e.g. the polysaccaride xanthan may be added to the injection liquid which is pumped into the subterranean formations. At present xanthan is commercially provided as a fermentation broth, typically having 3% xanthan concentration, as concentrated fermentation broth from ultra filtration, typically having 9% xanthan contents and as xanthan powder containing 80-90% xanthan. The xanthan powder is produced by precipitating xanthan from fermentation broth with a water miscible solvent, such as e.g. isopropanol, and then the precipited xanthan is dried and grinded to a powder.

The dried xanthan powder is suffering from a high content of micro gels or so called aggregates. These are bodies of several polymer chains. The formation of aggregates is supposed to be caused by a strong dehydration during the drying process, and that a species of cross bindings thereby are formed between the single polymer chains. For the use in polymer flooding it is critical that the xanthan which is used does not comprise substantial amounts of aggregates as these after being used for a period of time, will cause clogging of the porous reservoir and thus undesirable pressure accumulation. Such xanthan powder is therefore unsuitable for enhanced oil recovery since it is containing aggregates. Xanthan fermentation broth and fermentation broth which is concentrated by ultra filtration normally possess a low content of aggregates and are therefore more suitable for the use in enhanced oil recovery. The problem in connection with these product forms is the relatively low xanthan concentration (3-9%) involving great transport and storage problems when the xanthan is to be used offshore.

There is thus an unsatisfied demand for xanthan products which are suitable for use in enhanced oil recovery offshore.

The object of the present invention is thus to provide a product having a higher xanthan concentration (appr. 50%) than the xanthan obtainable by ultrafiltration, and which in addition does not contain substantial amounts of aggregates.

A further benefit would be if a biocide is already present in such a concentrate, such biocides always have to be used together with the xanthan in the proportion 1:1 - 1:2 to prevent microbial degradation. If the biocide is already premixed in the xanthan concentrate before this is transported to a platform and the xanthan concentration at the same time is 10% or preferably higher, this would to a great extent solve the transport problem of the biocide.

The problem is solved by providing a xanthan concentrate which by dilution to use concentrations with water or brine as diluent enhances the oil recovery of oil reservoirs without forming pore clogging aggregates.

Preferably the xanthan concentrate in addition comprises a biocide. This biocide is preferably formaldehyde.

Further a processs is provided according to the invention for preparing a xanthan concentrate possessing the above mentioned properties from a pre-concentrate prepared by the precipitation of an aquaous xanthan fermentate with a water miscible solvent, whereby the water miscible solvent is stripped from the pre-concentrate in a water vapour saturated atmosphere.

Preferably the water miscible solvent is stripped by blowing through water vapour having a temperature in the range of 80-150°C.

Preferably water vapour having a temperature of 100-110°C is used. Normally the preferred water miscible solvent is isopropanol.

The pre-concentrate is prepared by the precipitation of a xanthan fermentation broth or an already concentrated xanthan fermentation broth by adding to these liquids, dependent on the species containing 1-15% xanthan, an alchohol, e.g. isopropanol as mentioned above in a way well known per se. The precipitated xanthan is subsequently dried by mechanically removing liquid (containing water as well as water miscible solvent, preferably isopropanol).

The mechanical removal of the water containing liquid may in the laboratory be performed by simple manual squeezing, but can industrially be performed by careful filtration such as e.g. on a rotating drum filter scraping the filter cake off continuously, or by means of a screw press. According to the invention, the further concentration is performed by evaporation of isopropanol under a saturated water vapour atmosphere. The purpose thereof is to prevent too much water to be removed from the xanthan polymer thus forming aggregates. According to the invention the pre-concentrate or the final concentrate after the isopropanol evaporation is added a biocide solution compound, e.g. formaline, to enable a composition being stabilized against microbial degradation being transported to the site of use, e.g. platforms and being stored there until the dilution for use.

On the site of use the final concentrate may be diluted with sea water by use of shear forces to the desired xanthan and biocide concentration.

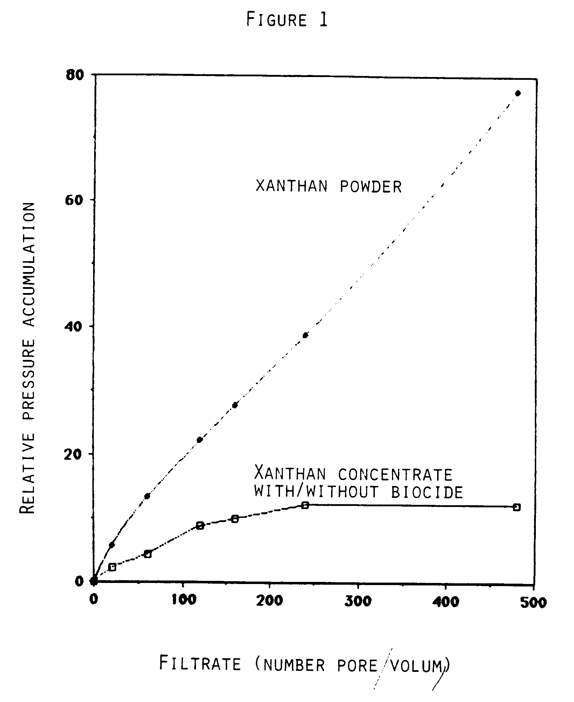

As indicated in figure 1, the xanthan concentrate of the present invention after dilution with sea water to the concentration of use after a certain amount of filtrate having passed a 5µm filter will yield a constant relative pressure accumulation, whereas redissolved xanthan powder results in a pressure accumulation increasing continuously with the amount of filtrate and thereby results in a clogging of the filter used in the test and consequently also the pores of the formation. The following examples elucidate the invention.

### EXAMPLE 1

Xanthan fermentation broth comprising 2.6% xanthan was under stirring added 2-10 times the volume of isopropanol. The precipitated water/isopropanol-containing xanthan was then dried by mechanically removing liquid (e.g. by squeezing), yielding a pre-concentrate having 26% xanthan concentration.

This pre-concentrate was then further concentrated at 100°C with a saturated water vapour stream till constant weight after 30 minutes. The product obtained had a xanthan concentration of 39%.

### EXAMPLE 2

Concentrated xanthan fermentation broth (8%) was precipitated and dried as previously disclosed in example 1. Subsequent to mechanical removal of liquid, this pre-concentrate had a xanthan concentration of 36%.

The further concentration was performed according to the final part of example 1 and yielded a product having 48% xanthan.

The product was diluted with water and formaline to a 10% xanthan concentration and a 20% formaldehyde concentration.

### EXAMPLE OF APPLICATION

The xanthan concentrates from exsample 1 and 2 as well as a pre-concentrate from example 2 were diluted by seawater to 0.04% xanthan concentration. Then the samples were filtered through 3 + 1.2 + 0.65µ millipore filters at high differential pressure (0.3-1.0 atmospheres) to remove cell debris. The filterabilities of these solutions were then tested by filtering through 3 x 5µm millipore filters at low differential pressures and shear velocities (4-8 s⁻¹) and measuring the pressure increase against the filter as a function of filtered liquid volume (Fig.1). For comparison the xanthan fermentation broth was dried at 105°C to constant weight. The product was subsequently diluted to 0.04% in sea water and the filterability was tested as previously disclosed. The steep indicated curve of redissolved xanthan powder was obtained.

As previously mentioned, this test reveals that whereas the xanthan solution which was prepared by redissolving the xanthan powder yielded a continuously increasing pressure with increasing filtrate volume, the xanthan solutions being prepared by diluting the xanthan concentrate/pre-concentrate according to the present invention yielded an initially, but more slowly increasing rise of pressure, whereas a constant and much lower pressure than that of the comparison product was obtained after a certain filtrate volume, appr. 250 pore volumes.

This test simulates the conditions of subterranean porous formations and indicates that the products prepared by the present invention will allow passing of large filtrate volumes during displacement of oil without achieving a clogging of the formations and thus accompanying high pressure rise which again will result in interruption of the recovery.

## Claims

1. Xanthan concentrate which by dilution with water or sea water in concentrations for use as viscosifiers for enhanced oil recovery in oil wells do not form pore clogging aggregates prepared from a pre-concentrate obtained by precipitation of an aqueous xanthan fermentate with a water miscible solvent as precipitant,
characterized by the precipitant being substantially removed from the pre-concentrate by passing through a saturated aqueous vapour stream.

2. The xanthan concentrate of claim 1,
characterized by the precipitant being stripped by blowing through aqueous vapour at a temperature in the range of 80-150°C.

3. The xanthan concentrate of claim 2,
characterized in the precipitant being stripped by blowing through aqueous vapour at a temperature in the range of 100-110°C.

4. The xanthan concentrate of claim 1-3,
characterized in being further added a biocide.

5. The xanthan concentrate of claim 4,
characterized in the biocide being formaldehyde.

6. The xanthan concentrate of claim 4,
characterized in comprising from approximately 10 - 30% xanthan and 10-30% biocide.

7. Process of preparing a xanthan concentrate according to claim 1 starting from a pre-concentrate prepared by precipitation of an aqueous xanthan fermentate with a water miscible solvent, characterized in removing the aqueous miscible solvent substantially from the pre-concentrate by passing through a saturated aqueous vapour stream.

8. The process of claim 7,
characterized in that the water miscible solvent being stripped by blowing through water vapour at a temperature in the range of 80-150°C.

9. The process of claim 8,
characterized in the use of water vapour at a temperature of 100-110°C.

10. Use of the product according to claim 1-6 or a preconcentrate obtained by precipitation of fermentate and mechanical squeezing of water and precipitant in an enhanced recovery of oil from subterranean formations.

## Patentansprüche

1. Xanthankonzentrat, das durch Verdünnung mit Wasser oder Meerwasser, um die Konzentrationen als Viskositätsmittel für eine verbesserte Ölgewinnung in Ölbohrlöchern auszunutzen, keine die Poren verstopfenden Aggregate bildet, das aus einem Vorkonzentrat hergestellt wird, das durch Fällung eines wässrigen Xanthanfermentates mit einem mit Wasser mischbaren Lösungsmittel als Fällungsmittel erhalten wurde,
dadurch gekennzeichnet,
daß das Fällungsmittel vom Vorkonzentrat im wesentlichen entfernt wird, indem es durch einen gesättigten Wasserdampfstrom geleitet wird.

2. Xanthankonzentrat nach Anspruch 1,
dadurch gekennzeichnet,
daß das Fällungsmittel gestrippt wird, indem Wasserdampf bei einer Temperatur im Bereich von 80 bis 150°C hindurchgeblasen wird.

3. Xanthankonzentrat nach Anspruch 2,
dadurch gekennzeichnet,
daß das Fällungsmittel gestrippt wird, indem Wasserdampf bei einer Temperatur im Bereich von 100 bis 110°C hindurchgeblasen wird.

4. Xanthankonzentrat nach Anspruch 1 bis 3,
dadurch gekennzeichnet,
daß außerdem ein Biozid zugesetzt wird.

5. Xanthankonzentrat nach Anspruch 4,
dadurch gekennzeichnet,
daß das Biozid Formaldehyd ist.

6. Xanthankonzentrat nach Anspruch 4,
dadurch gekennzeichnet,
daß es etwa 10 bis 30% Xanthan und 10 bis 30% Biozid umfaßt.

7. Verfahren zur Herstellung des Xanthankonzentrates nach Anspruch 1, das von einem Vorkonzentrat ausgeht, das durch Fällung eines wässrigen Xanthanfermentates mit einem mit Wasser mischbaren Lösungsmittel hergestellt wurde,
dadurch gekennzeichnet,
daß das mit Wasser mischbare Lösungsmittel aus dem Vorkonzentrat im wesentlichen entfernt wird, indem es durch einen gesättigten Wasserdampfstrom geleitet wird.

8. Verfahren nach Anspruch 7,
dadurch gekennzeichnet,
daß das mit Wasser mischbare Lösungsmittel gestrippt wird, indem Wasserdampf bei einer Temperatur im Bereich von 80 bis 150°C hindurchgeblasen wird.

9. Verfahren nach Anspruch 8,
gekennzeichnet durch die Verwendung von Wasserdampf mit einer Temperatur von 100 bis 110°C.

10. Verwendung des Produktes nach Anspruch 1 bis 6 oder eines Vorkonzentrates, das durch Fällung des Fermentates und durch mechanisches Ausquetschen des Wassers und des Fällungsmittels erhalten wurde, bei der verbesserten Gewinnung von Öl aus unterirdischen Formationen.

## Revendications

1. Concentré de xanthane qui, par dilution dans l'eau ou dans l'eau de mer à des concentrations pour une utilisation comme agent de viscosité dans la récupération assistée de pétrole dans les puits de pétrole, ne forme pas d'agrégats qui obstruent les pores, préparé à partir d'un pré-concentré obtenu par précipitation d'un fermentat de xanthane aqueux avec un solvant miscible dans l'eau utilisé comme précipitant, caractérisé en ce que le précipitant est pratiquement éliminé du pré-concentré par passage d'un courant de vapeur d'eau saturé.

2. Concentré de xanthane selon la revendication 1, caractérisé en ce que le précipitant est éliminé par insufflation de vapeur d'eau à une température comprise dans une gamme allant de 80 à 150°C.

3. Concentré de xanthane selon la revendication 2, caractérisé en ce que le précipitant est éliminé par insufflation de vapeur d'eau à une température comprise dans une gamme allant de 100 à 110°C.

4. Concentré de xanthane selon les revendications 1 à 3, caractérisé en ce qu'on lui ajoute de plus un biocide.

5. Concentré de xanthane selon la revendication 4, caractérisé en ce que le biocide est le formaldéhyde.

6. Concentré de xanthane selon la revendication 4, caractérisé en ce qu'il comprend approximativement de 10 à 30 % de xanthane et de 10 à 30 % de biocide.

7. Procédé de préparation d'un concentré de xanthane selon la revendication 1 en partant d'un pré-concentré préparé par précipitation d'un fermentat de xanthane aqueux avec un solvant miscible avec l'eau, caractérisé en ce que le solvant miscible avec l'eau est pratiquement éliminé du pré-concentré par passage d'un courant de vapeur d'eau saturé.

8. Procédé selon la revendication 7, caractérisé en ce que le solvant miscible avec l'eau est éliminé par insufflation de vapeur d'eau à une température comprise dans une gamme allant de 80 à 150°C.

9. Procédé selon la revendication 8, caractérisé en ce que l'on utilise de la vapeur d'eau à une température comprise entre 100 et 110°C.

10. Utilisation du produit selon les revendications 1 à 6 ou d'un pré-concentré obtenu par précipitation d'un fermentat et par pressage mécanique de l'eau et du précipitant dans une récupération assistée de pétrole de formations souterraines.
